# EUROPÄISCHE PATENTSCHRIFT

(11) **EP 0 924 585 B1**
(45) Veröffentlichungstag und Bekanntmachung des Hinweises auf die Patenterteilung: **27.06.2001**
(21) Anmeldenummer: 98123413.1
(22) Anmeldetag: 09.12.1998
(51) Int. Cl.: G05B 23/02, H02H 1/00

(54) **Überwachungsvorrichtung für Garagentorantriebe**
Surveillance device for garage door drive
Dispositif de surveillance d'actionneur de porte de garage

(30) Priorität: 19.12.1997 DE 19756616
(43) Veröffentlichungstag der Anmeldung: 23.06.1999
(73) Patentinhaber: SOMFY Feinmechanik und Elektrotechnik GmbH, 72108 Rottenburg (DE)
(72) Erfinder: Tobias, Ralph, 76534 Baden-Baden (DE); Buehner, Peter, 71679 Asperg (DE); Rathke, Joachim, 71701 Schwieberdingen (DE); Siegwart, Bernhard, 71723 Grossbottwar (DE)
(74) Vertreter: Otte, Peter, Dipl.-Ing.

(56) Entgegenhaltungen:
- EP-A- 0 610 711
- FR-A- 2 735 590

## Beschreibung

### Hintergrund der Erfindung

Die Erfindung betrifft eine Vorrichtung zur Überwachung eines von einem einen Mikrokontroller enthaltenden, programmierbaren Steuerwerk (nachstehend "Mikrokontroller" genannt) gesteuerten elektromotorischen Antriebs, insbesondere eines Garagentorantriebs, wobei wenigstens ein die Stärke des dem Antriebsmotor zufließenden Stroms angebendes erstes Überwachungssignal dem Mikrokontroller zugeführt wird, der so eingerichtet ist, daß er ein den Antriebsmotor außer Betrieb nehmendes Sicherungssignal ausgibt, wenn das Überwachungssignal einen eine bestimmte Motor-Höchststromstärke überschreitenden Wert angibt. Eine derartige Überwachungsvorrichtung ist aus der EP 0 610 711 A1 bekannt.

### Allgemeiner Stand der Technik

Heutige Garagentorantriebe enthalten zur Steuerung aller für den Betrieb des Antriebs notwendigen Steuerungsaufgaben zumeist einen Mikrokontroller. Für mikrokontrollergesteuerte Geräte mit Sicherheitsaufgaben müssen neuerdings erhöhte Sicherheitsnormen erfüllt werden (vgl. DIN V VDE 0801 in Übereinstimmung mit EN 60335). Somit reichen die bei älteren Garagentorantrieben vorhandenen Sicherheitsvorrichtungen, die z.B. ansprechen, wenn beim öffnen oder Schließen des Garagentors ein Hindernis eingeklemmt wird, und auch solche Vorrichtungen, die, wenn die Steuerung nicht mehr reagiert, den Motor spätestens in einer Endlage abschalten, für die heutigen Sicherheitsanforderungen nicht mehr aus.

Die oben erwähnte EP 0 610 711 A1 enthält zur Absicherung der Funktionen eines als Steuerorgan des Garagentorantriebs verwendeten Mikrokontrollers eine Selbsttesteinrichtung, die aus einer Abschalt- und/oder Steuersignale simulierenden Signalerzeugungsstufe, einer eine diesen Abschalt- und/oder Steuersignalen zugeordnete Reaktion in dem zentralen Mikrokontroller überprüfenden Prüfeinrichtung und einer den Elektromotor beim Auftreten wenigstens einer Fehlreaktion oder eines Fehlersignals blockierenden Schaltvorrichtung. Durch die Simulation von Abschalt- und/oder Steuersignalen können bei der bekannten Überwachungsvorrichtung Fehlfunktionen vor dem Einschalten des Elektromotors erkannt und dadurch unkontrollierte und gefährdende Bewegungen verhindert werden.

Zwar bietet die bekannte überwachungsvorrichtung einen erhöhten Sicherheitsstand, der jedoch auf der Simulation bestimmter Funktionen des Mikrokontrollers und nicht auf einer redundanten Auslegung sicherheitsrelevanter Motorsteuerungsfunktionen beruht.

### Kurzfassung der Erfindung

Es ist somit Aufgabe der Erfindung, eine gattungsgemäße Überwachungsvorrichtung zur Überwachung eines mikrokontrollergesteuerten elektromotorischen Antriebs, besonders für Garagentorantriebe, mit einem noch höheren Sicherheitsstand anzugeben, der die oben erwähnten neueren Sicherheitsnormen erfüllen kann.

Diese Aufgabe wird erfindungsgemäß durch redundante Auslegung wenigstens der für die Sicherheit kritischen Steuerungsaufgaben des Steuer-Mikrokontrollers gelöst.

Somit ist die Erfindung gemäß einem wesentlichen Aspekt dadurch gekennzeichnet, daß ein von dem die Steuerungsaufgaben ausführenden Mikrokontroller (nachstehend auch Steuer-Mikrokontroller genannt) separater Überwachungsbaustein vorgesehen ist, dem parallel zu diesem Steuer-Mikrokontroller das erste Überwachungssignal zugeführt wird und der unabhängig vom ersten Sicherungssignal vom Mikrokontroller den Antriebsmotor mit einem zweiten Sicherungssignal außer Betrieb nimmt, wenn das erste Sicherungssignal entweder nicht erzeugt wird oder nicht zur Außerbetriebnahme des Antriebsmotors führt. Alternativ kann der Überwachungsbaustein mit dem zweiten Sicherungssignal auch eine Hindernisfreigabe durchführen. Das kann auch abhängig von der Bewegungsrichtung geschehen. Zum Beispiel "Stop" beim Zustand: "Tor läuft auf" und Hindernisfreigabe bei: "Tor läuft zu".

Ein mit der erfindungsgemäßen Überwachungsvorrichtung ausgestatteter elektromotorischer Garagentorantrieb ist deutlich sicherer als bisherige Antriebe, da alle Einfachfehler erkannt werden und die Steuerung den Antrieb in einen sicheren Zustand überführen und erkannte Fehler auch anzeigen kann.

Ein mit der erfindungsgemäßen Überwachungsvorrichtung versehener Garagentorantrieb erfüllt die oben erwähnten Sicherheitsnormen nach DIN V VDE 0801 und kann deshalb das amtlich dafür vorgesehene Prüfsiegel, nämlich das TÜV-GS-Zeichen, bekommen.

In einer bevorzugten Ausführungsform wird mit dem ersten vom genannten Steuer-Mikrokontroller und dem zweiten vom Überwachungsbaustein erzeugten Sicherungssignal jeweils ein separates Sicherheitsabschaltmittel beaufschlagt, so daß der Antriebsmotor von diesen Sicherungssignalen separat abschaltbar ist, oder, wie erwähnt, eine Hindernisfreigabe durchführbar ist.

Korrespondierend mit den Zeitbedingungen der in einem programmierten Steuer-Mikrokontroller ablaufenden Routinen erzeugt der Überwachungsbaustein das zweite Sicherungssignal nach einer bestimmten Zeitverzögerung nach erkannter Antriebsmotor-Überstrombedingung, die größer ist als die normale Reaktionszeit bei Außerbetriebnahme des Motors durch das erste Sicherungssignal. Somit reagiert der Überwachungsbaustein für den Fall, daß der die Steuerungsaufgaben durchführende Mikrokontroller den Motor nicht abschaltet, obwohl eine unzulässig hohe Stromstärke des Motors vorliegt. Dieser Fall kann eintreten, wenn dieser Steuer-Mikrokontroller oder die in ihm enthaltene Software einen Fehler aufweisen.

Der Überwachungsbaustein stellt somit einen zweiten, unabhängigen Abschaltweg für den Motor dar, wie er in der oben genannten Sicherheitsnorm DIN V VDE 0801 gefordert ist.

In einer vorteilhaften Ausgestaltung der Erfindung kann der Überwachungsbaustein zusätzlich zur Motorstromüberwachung auch den Mikrokontroller überwachen. Dazu empfängt der Überwachungsbaustein ein zweites Überwachungssignal vom Mikrokontroller, das dieser bei seiner ordnungsgemäßen Funktion aussendet. Dieses zweite Überwachungssignal kann z.B. ein "Watchdog"-Signal sein. Das "Watchdog"-Signal ist ein regelmäßiges Signal, das der Mikrokontroller aussendet, solange er ordnungsgemäß arbeitet.

Weiterhin kann das zweite Überwachungssignal ein Signal aus einer seriellen Schnittstelle sein, wie z.B. interne Prozeßdaten, die eine ordnungsgemäße Funktion anzeigen, oder auch ein oder mehrere andere Signale, die sich zur Überwachung eines Mikrokontrollers eignen.

In weiterer vorteilhafter Ausgestaltung kann der Überwachungsbaustein neben dem die eigentlichen Steuerungsaufgaben ausführenden Mikrokontroller auch noch weitere Mikrokontroller, Logikbausteine oder Schaltungsteile, wie z.B. Funkdekoder, Einbahnstraßen-Steuerungen für die Garageneinfahrt o.ä., überwachen, und erhält dazu von diesen zusätzlichen Vorrichtungen weitere Überwachungssignale, die er auf ihr Vorhandensein oder Nicht-Vorhandensein, ihren Inhalt, ihre Frequenz, Plausibilität o.ä. überwacht.

In bevorzugter Ausführungsform ist der Überwachungsbaustein selbst als programmgesteuerter Mikrokontroller ausgeführt. Dabei kann er ein eigenes regelmäßiges "Watchdog"-Signal, interne Prozeßdaten oder andere geeignete Signale abgeben, mit deren Hilfe der die Steuerungsaufgaben wahrnehmende Mikrokontroller oder andere Schaltungsteile den Überwachungsbaustein überwachen können.

Der als Mikrokontroller ausgeführte Überwachungsbaustein und/oder die weiteren Mikrokontroller können in bekannter Weise mit Selbsttest-Routinen ausgestattet sein und jeweilige Ergebnisse dieser internen Testroutinen als Prozeßdaten an andere Mikrokontroller zur gegenseitigen Überwachung derselben senden.

Bei dieser redundante Funktionen aufweisenden Kombination mehrerer Mikrokontroller, insbesondere mit dem die Steuerungsaufgaben wahrnehmenden Mikrokontroller und dem Überwachungs-Mikrokontroller kann ersterer und/oder letzterer beim Auftreten eines Fehlers den Antrieb in einen sicheren Zustand überführen und/oder mittels Anzeigeelementen einen aufgetretenen Fehler anzeigen.

Der Steuer-Mikrokontroller und/oder der Überwachungs-Mikrokontroller können auch zu Diagnose- und Reparaturzwecken ein Ausgangssignal erzeugen, das die Art eines Fehlers oder einen defekten Schaltungsteil identifiziert und das an ein Ausgabegerät und/oder eine Anzeigevorrichtung übertragen werden kann. Somit ist durch Anzeige erkannter Fehler eine schnelle Fehlerdiagnose mit entsprechender kostengünstiger Reparatur möglich.

### Beschreibung einer bevorzugten Ausführungsform

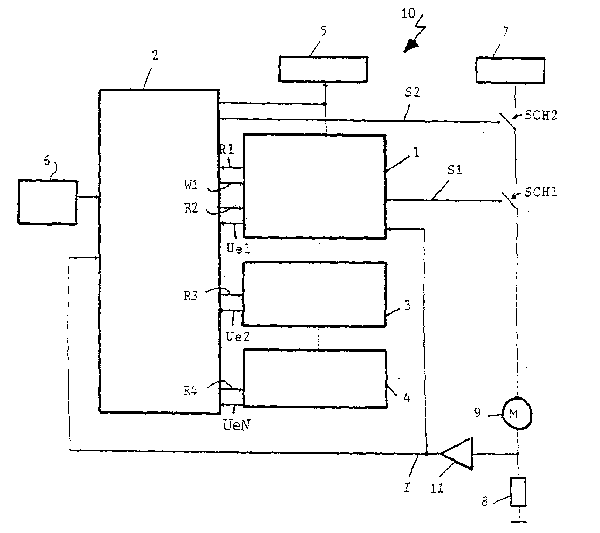

Die nachstehende Beschreibung erläutert unter Bezugnahme auf die einzige Figur eine bevorzugte Ausführungsform der erfindungsgemäßen Überwachungsvorrichtung.

Die Figur zeigt, daß in einer allgemein mit der Bezugszahl 10 bezeichneten erfindungsgemäßen Überwachungsvorrichtung mehrere Steuerungsbausteine, wie ein Steuer-Mikrokontroller 1, ein Decoder 3 und ein weiterer Steuerbaustein 4, der ein fest verdrahteter Logikbaustein oder auch eine programmierte Mikrokontrollereinheit sein kann, mit einem Überwachungsbaustein 2 über mehrere Signalleitungen verbunden sind. In der dargestellten Ausführungsform ist der Überwachungsbaustein 2 selbst als programmgesteuerter Mikrokontroller ausgeführt und erhält ein Taktsignal von einem unabhängigen Takterzeuger 6. Die Ziffer 7 bezeichnet eine Motorstrom-Speisevorrichtung, wie z.B. einen Netzspannungsanschluß, Ziffer 9 bezeichnet einen Antriebsmotor 9 für einen Garagentorantrieb und Ziffer 8 einen Shunt-Widerstand, an dem ein den Motorstrom angebendes Überwachungssignal I abgegriffen wird, das über einen Verstärker 11 parallel sowohl dem Steuer-Mikrokontroller 1 als auch dem Überwachungsbaustein 2 als erstes Überwachungssignal zugeführt wird.

Der Steuer-Mikrokontroller 1 ist so eingerichtet, daß er, wenn er erkennt, daß das erste Überwachungssignal I einen Wert hat, der das Überschreiten einer maximalen Motorstromstärke angibt, ein erstes Sicherungssignal S1 ausgibt, das ein erstes Motorabschaltmittel SCH1 aktiviert, so daß der Motor 9 außer Betrieb genommen wird. Dies ist die fehlerfreie, normale Überwachungsfunktion des Steuer-Mikrokontrollers 1 zur Überwachung der Motorstromstärke I.

Parallel dazu kann der Überwachungsbaustein 2, der ebenfalls das die Motorstromstärke angebende Signal I empfängt, wenn dieses nach einer gewissen Zeitdauer immer noch das Überschreiten der maximalen Motorstromstärke angibt, ein zweites Sicherungssignal S2 erzeugen, das ein zweites Sicherheitsabschaltmittel SCH2 aktiviert, welches in Reihe zum ersten Sicherheitsabschaltmittel SCH1 liegt, so daß der Überwachungsbaustein 2 anstatt des Steuer-Mikrokontrollers 1 den Motor 9 beim Auftreten einer Überstrombedingung abschalten kann. Hier ist anzumerken, daß die in der Figur dargestellte Ausführungsform zwei getrennte Abschaltmittel, z.B. Relais, SCH1, SCH2 enthält. Es muß sich aber nicht in jedem Fall um zwei getrennte Relais o.ä. handeln. Realisierbar ist auch z.B. eine doppelte Ansteuerung/Abschaltung eines Relais.

Bei der in der Figur dargestellten, bevorzugten Ausführungsform der erfindungsgemäßen Überwachungsvorrichtung ist, wie bereits erwähnt, der Überwachungsbaustein 2 ebenfalls als programmgesteuerter Mikrokontroller ausgeführt. Er empfängt außerdem vom Steuer-Mikrokontroller 1 und weiteren Logikbausteinen bzw. Kontrollern 3, 4 zweite, dritte und vierte Überwachungssignale, die jeweils mit Ue1, Ue2 und UeN bezeichnet sind. Diese Überwachungssignale sind z.B. regelmäßig erzeugte sog. "Watchdog"-Signale, so daß der Überwachungsbaustein 2 ebenfalls die korrekte Funktion der Schaltungsbausteine 1, 3, 4 usw. überwachen kann.

Weiterhin kann der Überwachungsbaustein 2 selbst ein solches "Watchdog"-Signal W1 an den Steuer-Mikrokontroller 1 übertragen, der in diesem Fall die korrekte Funktion des Überwachungsbausteins 2 überwachen kann.

Reset-Signale R1, R2 werden wechselseitig von jedem programmgesteuerten Mikrokontrollerbaustein 1, 2 dem jeweils anderen programmgesteuerten Mikrokontrollerbaustein 2, 1 eingegeben, um diese beim Auftreten eines Software-Fehlers zurückzusetzen.

Außerdem erzeugt der Überwachungsbaustein 2 weitere Rücksetzsignale R3, R4, jeweils, wenn er anhand des jeweiligen Überwachungssignals Ue2, Ue3 einen Fehler des dieses Überwachungssignal erzeugenden Schaltungsbausteins oder Kontrollers erkannt hat.

Wie dem Fachmann bekannt ist, können Mikrokontroller und Schaltungsbausteine anstatt durch Erkennung der Regelmäßigkeit von "Watchdog"-Signalen auch durch eine Interpretation intern erzeugter Prozeßdaten oder anderer geeigneter Signale auf ordnungsgemäße Funktion überwacht werden. Wenn der Überwachungsbaustein 2, wie im Ausführungsbeispiel, und auch die weiteren Bausteine als Mikrokontroller ausgeführt sind, können sich diese mit Hilfe interner Testroutinen (Selbsttest) selbst auf ordnungsgemäße Funktion überwachen. Dies betrifft die Funktion von CPU, ROM-Speicher, RAM-Speicher, EEPROM-Speicher, EA-Schnittstellen usw.. Die Ergebnisse dieser internen Testroutinen können ebenfalls als zu überwachendes Signal an einen oder mehrere der anderen Mikrokontroller ausgegeben werden.

Die Figur zeigt außerdem, daß eine mit dem Steuer-Mikrokontroller und dem Überwachungsbaustein 2 verbundene Anzeigevorrichtung 5 vorgesehen ist und zur Anzeige von aufgetretenen Fehlern verwendet wird. So kann die Art des Fehlers bzw. auch der Ort des defekten Schaltungsbausteins identifiziert und an der Anzeigevorrichtung 5 angezeigt werden.

Die in der Fig. dargestellte bevorzugte Ausführungsform ist, was das Überwachungs- und Sicherheitskonzept im einzelnen betrifft, sehr flexibel und an die verschiedensten Überwachungsaufgaben für elektromotorische Antriebe anpaßbar. Es hängt somit vom jeweiligen Überwachungs- und Sicherheitskonzept ab, welche Funktionen des Steuer-Mikrokontrollers 1 und/oder der weiteren Bausteine im Überwachungsbaustein 2 noch redundant ausgelegt werden.

Da dem Fachmann verschiedene Überwachungs- und Sicherheitskonzepte für unterschiedliche mikrokontrollergesteuerte elektromotorische Antriebe geläufig sind, ist deutlich, daß die erfindungsgemäße Überwachungsvorrichtung nicht nur zur Überwachung und zur Erhöhung der Sicherheit eines elektromotorischen Garagentorantriebs einsetzbar ist, sondern sich statt dessen auch für die Überwachung und Erhöhung der Sicherheitsfunktionen anderer elektromotorischer Antriebe eignet, wie z.B. von Drehtürenantrieben in Kaufhäusern oder dergleichen, Rolltreppen und Aufzugsantrieben und dergleichen.

## Patentansprüche

1. Vorrichtung zur Überwachung eines mikrokontrollergesteuerten elektromotorischen Antriebs, insbesondere eines Garagentorantriebs, wobei wenigstens ein die Stärke des dem Antriebsmotor (9) zufließenden Stroms angebendes erstes überwachungssignal (I) dem Mikrokontroller (1) zugeführt wird, der so eingerichtet ist, daß er ein den Antriebsmotor (9) außer Betrieb nehmendes Sicherungssignal (S1) ausgibt, wenn das Überwachungssignal (I) einen eine bestimmte Motor-Höchststromstärke überschreitenden Wert angibt,
**dadurch gekennzeichnet, daß** ein von dem die Steuerungsaufgaben ausführenden Mikrokontroller (1) separater Überwachungsbaustein (2) vorgesehen ist, dem parallel zum Mikrokontroller das erste Überwachungssignal (I) zugeführt wird und der unabhängig vom ersten Sicherungssignal (S1) vom Mikrokontroller (1) den Antriebsmotor mit einem zweiten Sicherungssignal (S2) außer Betrieb nimmt oder eine Hindernisfreigabe durchführt, wenn das erste Sicherungssignal (S1) entweder nicht erzeugt wird oder nicht zur Außerbetriebnahme des Antriebsmotors (9) führt.

2. Vorrichtung zur Überwachung, **dadurch gekennzeichnet, daß** der Überwachungsbaustein (2) mit dem zweiten Sicherungssignal (S2) eine Hindernisfreigabe abhängig von der Bewegungsrichtung eines angetriebenen Tors durchführt.

3. Überwachungsvorrichtung nach Anspruch 1 oder 2, **dadurch gekennzeichnet, daß** zumindest das erste oder zweite Sicherungssignal jeweils ein separates Sicherheitsabschaltmittel (SCH1, SCH2) zum Abschalten des Antriebsmotors (9) beaufschlagen.

4. Überwachungsvorrichtung nach einem der Ansprüche 1 bis 3, **dadurch gekennzeichnet, daß** der Überwachungsbaustein (2) das zweite Sicherungssignal (S2) mit einer bestimmten Verzögerungszeit nach erkannter Antriebsmotor-Überstrombedingung ausgibt, wobei diese Verzögerungszeit größer ist als die normale Reaktionszeit bei der Außerbetriebnahme des Motors (9) durch das erste Sicherungssignal (S1).

5. Überwachungsvorrichtung nach einem der vorangehenden Ansprüche, **dadurch gekennzeichnet, daß** der Überwachungsbaustein (2) außerdem wenigstens ein zweites Überwachungssignal (Ue1) vom Steuer-Mikrokontroller bei dessen ordnungsgemäßer Funktion erhält.

6. Überwachungsvorrichtung nach Anspruch 5, **dadurch gekennzeichnet, daß** das zweite Überwachungssignal (Ue1) ein regelmäßig erzeugtes "Watchdog"-Signal ist.

7. Überwachungsvorrichtung nach einem der vorangehenden Ansprüche, **dadurch gekennzeichnet, daß** der Überwachungsbaustein (2) zur Überwachung weiterer Mikrokontroller, Logikbausteine oder Schaltungsteile (3, 4) eingerichtet ist, und dazu weitere Überwachungssignale (Ue2, UeN) von diesen Vorrichtungen (3, 4) empfängt.

8. Überwachungsvorrichtung nach einem der vorangehenden Ansprüche, **dadurch gekennzeichnet, daß** der Überwachungsbaustein (2) selbst als programmgesteuerter Mikrokontroller ausgeführt ist.

9. Überwachungsvorrichtung nach Anspruch 8, **dadurch gekennzeichnet, daß** der als Mikrokontroller ausgeführte Überwachungsbaustein (2) ein eigenes regelmäßiges "Watchdog"-Signal (W1), interne Prozeßdaten oder andere geeignete Signale abgibt, mit deren Hilfe der Steuer-Mikrokontroller (1) und/oder andere Mikrokontroller (3, 4) oder Schaltungsteile den Überwachungsbaustein (2) überwachen können.

10. Überwachungsvorrichtung nach Anspruch 8 oder 9, **dadurch gekennzeichnet, daß** der Überwachungsbaustein (2) und/oder die weiteren Mikrokontroller (1, 3, 4) mit internen Testroutinen ausgestattet sind und jeweils Ergebnisse dieser Testroutinen als Prozeßdaten an andere Mikrokontroller zur jeweiligen Überwachung der diese Prozeßdaten ausgebenden Bausteine bzw. Mikrokontroller senden.

11. Überwachungsvorrichtung nach einem der vorangehenden Ansprüche, **dadurch gekennzeichnet, daß** der Steuer-Mikrokontroller (1) und/oder der Überwachungsbaustein (2) beim Auftreten eines Fehlers die Antriebssteuerung in einen sicheren Zustand überführen und/oder mittels Anzeigeelementen (5) den aufgetretenen Fehler anzeigen.

12. Überwachungsvorrichtung nach einem oder mehreren der vorangehenden Ansprüche, **dadurch gekennzeichnet, daß** der Steuer-Mikrokontroller (1) und/oder der Überwachungsbaustein (2) zu Diagnose- und Reparaturzwecken ein die Art des Fehlers bzw. eines defekten Schaltungsteils identifizierendes Ausgangssignal erzeugen, das an ein Ausgabegerät und/oder eine Anzeigevorrichtung (5) übertragen wird.

## Claims

1. A device for monitoring a microcontroller-controlled electromotive drive, in particular a garage door drive, wherein at least one first monitoring signal (I), indicating the intensity of the current flowing to the drive motor (9), is transmitted to the microcontroller (1) which is set up to output a safety signal (S1) deactivating the drive motor (9) when the monitoring signal (I) indicates a value exceeding a specified maximum motor current intensity, characterised in that a monitoring module (2) is provided which is separate from the microcontroller (1) carrying out the control tasks, and to which the first monitoring signal (I) is transmitted parallel to the microcontroller and which, independently of the first safety signal (S1) from the microcontroller (1), deactivates the drive motor by means of a second safety signal (S2) or clears a hindrance when the first safety signal (S1) is either not generated or does not result in the drive motor (9) being deactivated.

2. A monitoring device, characterised in that the monitoring module (2) clears a hindrance by means of the second safety signal (S2) depending upon the direction of movement of a driven door.

3. A monitoring device according to claim 1 or 2, characterised in that at least the first or second safety signal activates a respective separate safety cut-out means (SCH1, SCH2) for switching off the drive motor (9).

4. A monitoring device according to any one of claims 1 to 3, characterised in that the monitoring module (2) outputs the second safety signal (S2) with a specified delay time after the overload-current condition of the drive motor has been detected, this delay time being greater than the normal reaction time when the motor (9) is deactivated by the first safety signal (S1).

5. A monitoring device according to any one of the preceding claims, characterised in that the monitoring module (2) also receives at least one second monitoring signal (Ue1) from the controlling microcontroller during its proper functioning.

6. A monitoring device according to claim 5, characterised in that the second monitoring signal (Ue1) is a periodically generated "watchdog" signal.

7. A monitoring device according to any one of the preceding claims, characterised in that the monitoring module (2) is set up to monitor further microcontrollers, logic modules or circuit components (3, 4), and also receives further monitoring signals (Ue2, UeN) from these devices (3, 4).

8. A monitoring device according to any one of the preceding claims, characterised in that the monitoring module (2) is itself constructed as a program-controlled microcontroller.

9. A monitoring device according to claim 8, characterised in that the monitoring module (2), constructed as a microcontroller, transmits a separate, periodic watchdog signal (W1), internal process data or other suitable signals, by means of which the controlling microcontroller (1) and/or other microcontrollers (3, 4) or circuit components can monitor the monitoring module (2).

10. A monitoring device according to claim 8 or 9, characterised in that the monitoring module (2) and/or the further microcontrollers (1, 3, 4) are equipped with internal test routines and transmit the results of each of these test routines as process data to other microcontrollers for monitoring the respective modules or microcontrollers outputting this process data.

11. A monitoring device according to any one of the preceding claims, characterised in that, when an error occurs, the controlling microcontrollers (1) and/or the monitoring module (2) bring the drive control system into a safe state and/or indicate, by means of display devices (5), the error which has occurred.

12. A monitoring device according to one or more of the preceding claims, characterised in that, for diagnostic and repair purposes, the controlling microcontrollers (1) and/or the monitoring module (2) generate an output signal identifying the type of error or a defective circuit component, the output signal being transmitted to an output device and/or a display device (5).

## Revendications

1. Dispositif de surveillance d'actionneur à moteur électrique commandé par microcontrôleur, en particulier d'un actionneur de porte de garage, dans lequel au moins un premier signal d'alerte (I) détectant l'intensité du courant arrivant au moteur d'entraînement (9) est transmis au microcontrôleur (1), conçu de façon qu'il émette un signal de sécurité (S1) assurant la mise hors service du moteur d'entraînement (9), lorsque le signal d'alerte (I) indique une valeur de dépassement de l'intensité maximale admissible pour le moteur,
caractérisé en ce qu'
un bloc de surveillance (2) séparé du microcontrôleur (1) assurant les opérations de commande, reçoit parallèlement au microcontrôleur, le premier signal d'alerte (I), et indépendamment du premier signal de sécurité (S1) provenant du microcontrôleur (1), met hors service le moteur d'entraînement à l'aide d'un deuxième signal de sécurité (S2), ou exécute une libération d'obstacle lorsque le premier signal de sécurité (S1), ou bien n'a pas fonctionné, ou bien n'a pas abouti à la mise hors service du moteur d'entraînement (9).

2. Dispositif de surveillance selon la revendication 1,
caractérisé en ce que
le bloc de surveillance (2) effectue, avec le deuxième signal de sécurité (S2) une libération d'obstacle, en fonction de la direction du mouvement d'une porte motorisée.

3. Dispositif de surveillance selon l'une des revendications 1 ou 2,
caractérisé en ce qu'
au moins le premier ou le deuxième signal de sécurité actionne respectivement un interrupteur de coupure de sécurité séparé (SCH1, SCH2) pour la coupure du moteur d'entraînement (9).

4. Dispositif de surveillance selon l'une quelconque des revendications 1 à 3,
caractérisé en ce que
le bloc de surveillance (2) émet le deuxième signal de sécurité (S2) après une certaine temporisation à la suite de la reconnaissance des conditions de surintensité du moteur d'entraînement, cette temporisation étant plus longue que le temps normal de réaction de la mise hors service du moteur (9) par le premier signal de sécurité (S1).

5. Dispositif de surveillance selon l'une quelconque des revendications précédentes,
caractérisé en ce que
le bloc de surveillance (2) reçoit en plus du microcontrôleur de commande, au moins un deuxième signal d'alerte (Ue1) dans le cadre de sa fonction normale.

6. Dispositif de surveillance selon la revendication 5,
caractérisé en ce que
le deuxième signal d'alerte (Ue1) est un signal « chien de garde » régulièrement émis.

7. Dispositif de surveillance selon l'une quelconque des revendications précédentes,
caractérisé en ce que
le bloc de surveillance (2) est conçu pour la surveillance d'autres microcontrôleurs, éléments logiques ou parties de circuit (3, 4), et reçoit à cet effet de ces contrôleurs (3, 4) d'autres signaux d'alerte (Ue2, UeN).

8. Dispositif de surveillance selon l'une des revendications précédentes,
caractérisé en ce que
le bloc de surveillance (2) est lui-même configuré comme un microcontrôleur programmé.

9. Dispositif de surveillance d'après la revendication 8,
caractérisé en ce que
le bloc de surveillance (2), configuré comme un microcontrôleur programmé, émet un propre signal « chien de garde » (W1) régulier, des données opératoires internes ou d'autres signaux appropriés, à l'aide desquels le microcontrôleur de commande (1) et/ou d'autres microcontrôleurs (3, 4) ou parties de circuit peuvent surveiller le bloc de surveillance (2).

10. Dispositif de surveillance selon la revendication 8 ou 9,
caractérisé en ce que
le bloc de surveillance (2) et/ou les autres microcontrôleurs (1, 3, 4) sont équipés de répétiteurs de tests internes, et envoient les différents résultats de ces tests en tant que données opératoires à d'autres microcontrôleurs pour la surveillance respective des blocs ou microcontrôleurs émettant ces données.

11. Dispositif de surveillance selon l'une quelconques des revendications précédentes,
caractérisé en ce que
le microcontrôleur de commande (1) et/ou le bloc de surveillance (2 ) dirigent l'entraînement vers un état sécurisé lorsque survient un défaut, et/ou indiquent le défaut survenu au moyen d'éléments indicateurs (5).

12. Dispositif de surveillance selon l'une ou plusieurs des revendications précédentes,
caractérisé en ce que
le microcontrôleur de commande (1) et/ou le bloc de surveillance (2) produisent, en vue d'un diagnostic et des opérations de réparation, un signal de sortie identifiant la nature du défaut ou la pièce défectueuse, ce signal étant transmis à un appareil d'émission et/ou à un dispositif indicateur (5).
